# EUROPEAN PATENT APPLICATION

(11) **EP 2 272 730 A1**
(43) Date of publication of application: **12.01.2011**
(21) Application number: 09008886.5
(22) Date of filing: 07.07.2009
(51) Int. Cl.: B60W 30/06, B60W 50/08

(54) **Method and apparatus for displaying distance data in a parking distance control system**

(71) Applicant: HI-KEY Limited, Tuam, County Galway (IE)
(72) Inventor: Togher, Mike, Tuam County Galway (IE)
(74) Representative: Pothmann, Karsten

(57) **Abstract**

The invention relates to a method and a apparatus for displaying distance data in a park distance control system on a vehicle driver information display with images and distance information between the vehicle and objects surrounding a parking space for the vehicle, whereby the displayed image are added with semi-circular overlays that indicate fixed, configurable distances. Additionally any available information from a park distance control system (PDC) is used to update the semi-circular overlays, in particular to indicate, if the vehicle is near to an object.

## Description

### Background of the invention

The invention relates to a method and an apparatus for displaying distance data in a parking distance control system of a vehicle according to the preamble of method claim 1 and to an apparatus according to claim 5 and to computer software according to claim 8.

Such parking distance control systems are well known for the support of a driver of a vehicle during a parking procedure. They compute at the beginning and/or shortly before the beginning of a parking procedure a park course or a park trajectory that marks the course of the vehicle. This course is computed on the basic geometry of a parking space and the vehicle position relative to this parking space. A possible park distance (PDC) control system for example contains front, back and/or laterally sensors (ultrasonic sensors and/or video cameras etc.). The parking space is computed from the distance data in that way, that the course or the so called park trajectory can be displayed and controlled for example by active driver guidance intervention.

It is also well known, that on a common video display a few static distance indications are shown as semi-circular overlays. Such object distance is indicated using the PDC sensors, for example the ultrasonic sensors. It is a disadvantage, that the video image is therefor obscured by several live overlays that may confuse the driver of the vehicle during the parking procedure.

### Summary of the invention

The invention is based on a method and an apparatus for displaying distance data in a park distance control system and according to the invention, on the displayed image semi-circular overlays that indicate fixed, configurable distances are added.

More specific this method can be used in an advantage manner for displaying distance data in a parking distance control system on a vehicle driver information display with images and distance information between the vehicle and objects surrounding a parking space, whereby advantageously the displayed images are added with semi-circular overlays that indicates fixed, configurable distances. So far the inventive method does not need to display the overlay PDC blocks, measured by the park distance control system (PDC), which may confuse the driver of the vehicle during the parking procedure.

Although it is advantageously possible that additionally any available information from a park distance control system (PDC) is used to update the semi-circular overlays, in particular to indicate, if the vehicle is near an object. The indication can easily be given by a change of colour and/or brightness of the semi-circular overlays.

The indication can be given in that way, if the park distance control system (PDC) indicates that no object is near the vehicle then the overlays are shown in a specific colour and when the park distance control system (PDC) indicates that an object is at\or inside the fixed distance overlay then that overlay changes the colour and/or brightness to highlight the object distance.

With an embodiment of the invention an apparatus for carrying out the above described method is proposed, whereby a computerized electronic circuit is connected with front, back and/or laterally sensors, in particular image sensors for detecting a basic geometry of a parking space and the vehicle position relative to this parking space and a display for showing the image sensor data and additionally fixed, configurable distances in that way, that the course or park trajectory of the vehicle can be displayed and influenced by active driver guidance intervention.

Thereby it is an exceptionall advantage of the invention that the available PDC information can be used to update the semi-circular overlays in that way, if the PDC indicate that no object is near the vehicle then the overlays are shown as for example green and when the PDC information indicates that an object is at\or inside the fixed distance overlay then that overlay changes colour and/or brightness to highlight the object distance. The colour can be changed from green to for example red or yellow. The change in colour is preferably performed such that only the colour of the semi-circular overlay closest to the object changes is changed.

As mentioned above the information data of a park distance control system (PDC) can be additionally used in that electronic circuit for a detection of the distances to objects. Here it is advantageous when a software program is stored on a computer-usable medium and comprises computer-readable program means which, when the software is run on a microprocessor with associated storage means or on a computer, cause said microprocessor or computer to carry out a method in an apparatus as described above.

### Brief description of the drawing

Exemplary embodiments of the invention are shown in the figures of the drawing and explained below. In the drawing shows:
Fig. 1 an illustration of a parking situation with a vehicle.
Fig. 2 a driver information display with fixed, configurable distances as semi-circuits around the vehicle and
Fig. 3 a functional block diagram with an electronic circuit for computing and displaying image and distance data.

### Detailed description of the invention

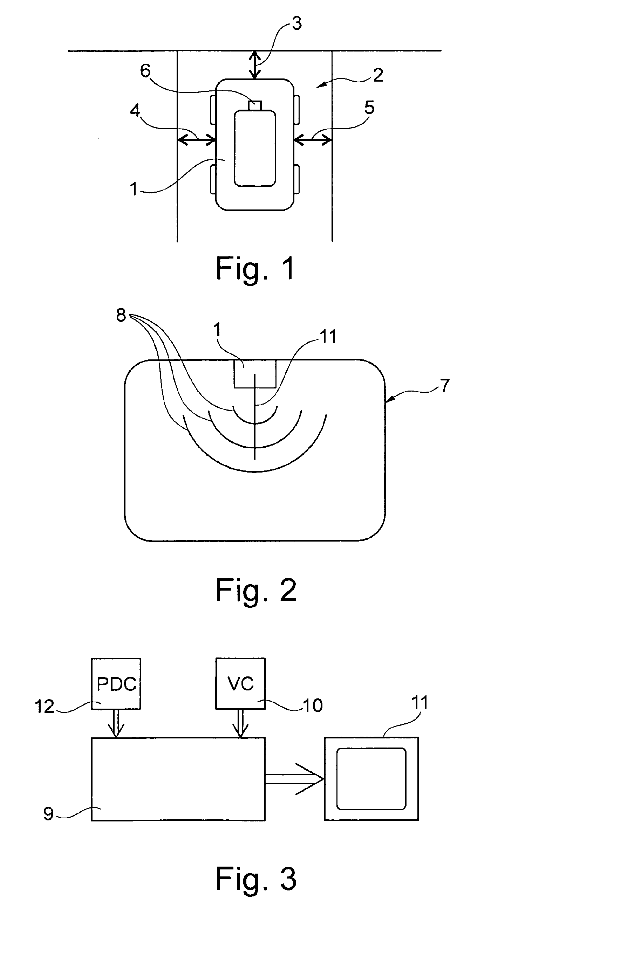

Fig. 1 shows a parking situation with a vehicle 1 in a parking space 2, where the vehicle 1 has a park distance control system PDC for detecting and displaying distances 3, 4, 5 to objects or markings surrounding the parking space 2. The vehicle 1 contains also a camera 6 for giving image data of the surrounding to the driver and/or a driver information or assistance system.
Fig. 2 shows a display 7 of the driver information or assistance system inside the vehicle 1 with to the image added semi-circular overlays that indicate fixed, configurable distances 8 to the vehicle 1.
Fig. 3 shows a computerized electronic circuit 9 , which is connected with front, back and/or laterally sensors, in particular an image sensor 10 for detecting a basic geometry of a parking space 2 (Fig. 1) and the vehicle 1 position relative to this parking space 2 and a Monitor 11 for displaying the image sensor data (display 7 in Fig. 2) and additionally the fixed, configurable distances 8 in that way, that the course or park trajectory 11 shown in Fig. 2 of the vehicle 1 can be displayed and influenced by active driver guidance intervention.

For that reason an available PDC information from a park distance control system 12 (PDC) is used to update the semi-circular overlays with the distances 8. That can be done in such way, that if the PDC indicates that no object is near the vehicle 1 then the overlays are shown as for example green and when the PDC information indicates that an object is at\or inside the fixed distance overlay then that overlay changes colour and/or brightness to highlight the object distance.

## Claims

1. A method for displaying distance data in a park distance control system on a vehicle driver information display with images and distance information between the vehicle and objects surrounding a parking space, **characterized in that** the displayed image are added with semi-circular overlays that indicate fixed, configurable distances.

2. Method according to Claim 1, **characterized in that** additionally any available information from a park distance control system (PDC) is used to update the semi-circular overlays, in particular to indicate, if the vehicle is near to an object.

3. Method according to Claim 2, **characterized in that** the indication is given by a change of colours and/or brightness of the semi-circular overlays.

4. Method according to Claim 1 or 2, **characterized in that** the indication is given in such way, that if the park distance control system (PDC) indicates that no object is near the vehicle then the overlays are shown in a specific colour and when the park distance control system (PDC) indicates that an object is at\or inside the fixed distance overlay then that overlay changes the colour and/or brightness to highlight the object distance.

5. Apparatus for carrying out a method according to one of the preceding claims, **characterized in that** a computerized electronic circuit is connected with front, back and/or laterally sensors, in particular image sensors for detecting a basic geometry of a parking space and the vehicle position relative to this parking space and a display for displaying the image sensor data and additionally fixed, configurable distances in such way, that the course or park trajectory of the vehicle can be displayed and influenced by active driver guidance intervention.

6. Apparatus according to Claim 5, **characterized in that** the information of a park distance control system (PDC) is additionally used for a detection of the distances to objects.

7. Apparatus according to Claim 5, **characterized in that** the information of a park distance control system (PDC) is additionally used for a detection of the distances to objects.

8. Software program which is stored on a computer-usable medium and comprises computer-readable program means which, when the software is run on a microprocessor with associated storage means or on a computer, cause said microprocessor or computer to carry out a method according to one of Claims 1 to 4 or an apparatus according to one of Claims 5 to 7.
